# EUROPEAN PATENT SPECIFICATION

(11) **EP 0 553 939 B1**
(45) Date of publication and mention of the grant of the patent: **19.06.1996**
(21) Application number: 93200962.4
(22) Date of filing: 29.08.1986
(51) Int. Cl.: G01F 1/84

(54) **Coriolis flowmeter**
Coriolis-Massendurchflussmesser Coriolis-Massendurchflussmesser
Débitmètre à effet Coriolis

(30) Priority: 22.05.1986 US 865715; 22.05.1986 US 865715
(43) Date of publication of application: 04.08.1993
(62) Divisional of application: 86905606.9
(73) Proprietor: MICRO MOTION INCORPORATED, Boulder Colorado 80301 (US)
(72) Inventor: Cage, Donald Reed, Longmont, Colorado 80504 (US); Lowe, Dean Edward, Boulder, Colorado 80301 (US)
(74) Representative: Hallybone, Huw George

(56) References cited:
- EP-A- 0 083 144
- WO-A-80/00389
- DE-A- 3 430 297
- FR-A- 2 394 065
- US-A- 2 897 254
- US-A- 3 818 122
- US-A- 4 283 593
- ENGINEERING MATERIALS & DESIGN vol. 29, no. 3, March 1985, SUTTON, SURREY, GB page 25 'MEASURING MASS FLOW USING VIBRATING TUBES'

## Description

The invention relates to providing electrical conductors for signal transmission between two structures, at least one of which is vibrating with respect to the other. In particular the invention has been found useful for Coriolis mass flow rate meters which include vibrating structures having electronic drive and sensor components mounted on the vibrating structures. The electrical conductors of the invention can be insulated with respect to each other and are arranged so that vibrations do not cause fatigue and breaking of the conductors and also minimizes coupling of mechanical forces and damping between the structures from which the conductors are mounted.

In the art of measuring mass flow rates of flowing substances it is known that flowing a fluid through a rotating or oscillating conduit induces Coriolis forces which act perpendicularly to both the velocity of the mass moving through the conduit and the angular velocity vector of the rotating or oscillating conduit. It is also known that the magnitudes of such Coriolis forces are related to both the mass flow rate passing through the conduit and the angular velocity of the conduit.

One of the major technical problems previously associated with efforts to design and make Coriolis mass flow rate instruments was the necessity either to measure accurately or control precisely the angular velocity of the conduit so that the magnitude of generated Coriolis forces could be determined and, therefrom, one could calculate the mass flow rate of the substance flowing through the conduit. Even if the angular velocity of the flow conduit could be determined or controlled, accurate determination of the magnitude of generated Coriolis forces was another technical problem previously associated with designing and making Coriolis mass flow rate instruments. This problem arises in part because the magnitude of generated Coriolis forces are very small, therefore resulting distortions of flow conduits which are oscillating or rotating are minute. Further, because of the small magnitude of the Coriolis forces, distortions of the conduit resulting from external sources such as invariably present vibrations induced, for example, by neighboring machinery or pressure surges in fluid lines cause erroneous determinations of mass flow rates. Such error sources may even completely mask the effects caused by generated Coriolis forces rendering the meter useless.

A mechanical configuration and measurement technique which, among other advances: (a) avoids the need to measure or control the magnitude of the angular velocity of a Coriolis mass flow rate instrument's flow sensing conduit; (b) concurrently provides requisite sensitivity and accuracy for the measurement of effects caused by generated Coriolis forces; and, (c) is not susceptible to errors resulting from external vibration sources, is taught in U.S. Patent Nos. Re 31,450, 4,422,338 and 4,491,025. The mechanical configuration disclosed in these patents incorporates curved flow sensing conduits which have no pressure sensitive sections, such as bellows or other pressure deformable portions. The curved flow sensing conduits are solidly cantilever mounted from the inlet and outlet ports of the conduits, e.g. welded or brazed, so that the conduits can be oscillated in spring-like fashion about axes which are located near the solidly mounted sections of the conduits. By further designing the mounted curved flow conduits so that they have resonant frequencies about the axes located near the solid mountings which are lower than the resonant frequencies about the axes which Coriolis forces act, a mechanical situation arises whereby the forces opposing generated Coriolis forces are predominantly linear spring forces. Oscillation of such a solidly mounted curved flow conduit while fluid is flowing through the flow conduit results in the generation of a Coriolis force couple. This Coriolis force couple is generated in two portions of the continuous flow conduit, to wit the portion where there is a velocity component of the fluid through the conduit directed toward the angular velocity vector, and the portion where there is a fluid velocity component directed away from the angular velocity vector. The Coriolis force couple opposed by a linear spring forces, twists or torques the curved conduit about an axis between the portions of the continuous flow conduit in which Coriolis forces are generated. The magnitude of the twisting or torquing is a function of the magnitudes of the generated Coriolis forces and the linear spring forces opposing the generated Coriolis forces.

The flow conduit in addition to being twisted by Coriolis forces is also being driven in oscillation. Accordingly, one of the portions of the continuous flow conduit on which the Coriolis forces are acting will be twisted so as to lead, in the direction in which the flow conduit is moving, and the other portion on which Coriolis forces are acting will be twisted so as to follow the first flow conduit section. The amount of time required for the twisted sections of the oscillating flow conduit to pass preselected points is a linear function of the mass flow rate of the fluid passing through the flow conduit. The relationship between the measured time and the mass flow rate passing through the flow conduit is only dependent on constants derived from the mechanics of the continuous flow conduit and its solid mounting. This relationship is not dependent on other variables which must be measured or controlled. Optical sensors are specifically described in U.S. Patent No. Re 31,450 and electromagnetic velocity sensors are specifically described in U.S. Patent Nos. 4,422,338 and 4,491,025 for making the required time measurements from which mass flow rates can be determined.

A double flow conduit embodiment with sensors for making the necessary time measurements is specifically described in U.S. Patent No. 4,491,025. The double flow conduit embodiment described in U.S. Patent No. 4,491,025 provides a Coriolis mass flow rate instrument configuration which is operated in a tuning fork manner as described in United States Reissue Patent Re 31,450. The tuning fork operation contributes to minimizing effects of external vibration forces. Minimizing effects of external vibration forces is important because these forces can induce errors in the required time measurement. This embodiment also provides for accurate determinations of fluid mass flow rates without being limited by vibrational forces which can be transmitted through the support where the flow conduits are solidly mounted. The vibrational forces transmitted through the support which are of concern here are those caused by the oscillation of the flow conduits. As the mass of flow conduits increase, the forces transferred to the support by oscillating the conduits similarly increase. Because the flow conduits are configured in, and oscillated in, a tuning fork arrangement, the forces arising in the support are of equal magnitude. The forces are directed predominantly against each other and therefore cancel.

The support for an instrument can include multiple structures as taught in United States Patent 4,491,025. In addition to welding or brazing the flow conduits to a first support structure, spacer bars, such as metal plates, can also be welded or brazed to adjacent portions of twin flow conduit embodiments at essentially equal distances from the first support structure. The combination of welding or brazing the flow conduits to the first support structure and to spacer bars results in an increase in the length of the flow conduit over which stress caused by oscillating the conduit is concentrated. This effective increase in the length of the flow conduit decreases the strain experienced by the flow conduit and therefore provides a configuration which is less likely to produce cracks in oscillating flow conduits. The use of spacer bars also results in movement away from the first support structure of the axis about which the flow conduits are oscillated.

Another problem associated with fabricating accurate Coriolis flow meters is the need to provide electrical conductors for signal transmission between the electrical components mounted from the vibrating flow conduits of Coriolis meters and the non-vibrating meter cases.

The arrangements for mounting wires for transmission of electrical signals between vibrating structures which are continuously vibrated are in part limited by several consequences arising from the vibration. Prolonged alternating motion of wires can cause the wires to experience fatigue which leads to their breaking, or can lead to their kinking which in combination with the cyclic motion exacerbates fatigue and causes the wires to break.

Another consequence of mounting wires from vibrating structures is that damping forces or driving forces can be coupled to the vibrating structures. Damping forces arise for example from (a) friction between wires or in some arrangements friction between the wires and adjacent structures (these frictional forces arise even when the insulating material on the wires is a synthetic resin polymer lubricating material such as is sold under the trademark Teflon), and (b) the internal structure of the material itself. Examples of driving forces include those which result from adjacent vibrating machinery. Coupling damping and driving forces to vibrating structures will alter the motion of the vibrating structures, which in many applications is an unacceptable consequence when unaltered vibrating motion of the structure is to be measured.

As an example of an attempt to compromise these problems, it has been known in the manufacture of Coriolis mass flow rate meters where flow conduits are continuously vibrated with respect to support structures that wires can be wrapped around the flow conduits from their base, where the flow conduits are solidly mounted to a support and not vibrated, up to locations on the vibrated flow conduits where the wires are connected to sensors and other electrical components. Wires can also be laid along the length of flow conduits and taped or glued to them.

Having wires wrapped or affixed, by tape or glue for example, to vibrating structures substantially precludes kinking problems because the wires are essentially kept in line and prevented from kinking by the structure to which they are mounted. As for the problem of fatigue, if the mechanical characteristics of the wires are at least equivalent to or even better than those of the vibrated structure, mechanical fatigue of the wires is a comparable engineering problem to that for the vibrated structure. However, these solutions, wrapping, taping or gluing, add additional mass to the flow conduits due to either the additional lengths in the conductors when wound around the flow conduits or the added tape and glue. This additional mass can alter the vibrating motion of the structure. In addition, because the effects of humidity and temperature on the glue and tape are not uniform, differential damping in the glue and tape can occur which can alter the vibrating motion of the structures. Thus, it would be advantageous to have an apparatus for electrically interconnecting vibrating structures that would provide for secure attachment of the conductors while minimizing the conductor length or the use of tape or glue.

Addressing the problem of minimizing the coupling of damping and driving forces to vibrating structures is a distinct problem from preventing kinking and fatigue. Continuing with the example of Coriolis mass flow rate meters, unless the wires are very light, such as 34 gauge and the structure about which it is wrapped is substantially more massive, such as a 2.54 centimeter (cm) diameter stainless steel flow conduit having a 0.3 cm wall thickness, the magnitude of coupled forces to the vibrating structure cannot necessarily be ignored. Another factor which can exacerbate the problem of forces being coupled to vibrating structures arises when wires are wrapped or in some way attached to more than one portion of a vibrating structure because the damping forces or driving forces coupled to the two portions may not be the same. Therefore, the sum of the different forces can cause the structure to twist.

Reducing the gauge of the wire used, tailoring the insulation on wires to minimize stiffness and friction, and using the most flexible but still temperature insensitive wire possible are readily available considerations engineers can make when faced with the problem of transmission of electrical signals along conductors mounted between vibrating structures. However, these specification considerations alone will not always be sufficient. Accordingly, it is one aim of the invention to provide a means for mounting wires between vibrating structures that will essentially minimize wire breakage and the coupling of damping and driving forces that can alter the motion of the vibrating structures. Another aim of the invention is to be able to provide for secure attachment of the conductors to a vibrating structure while minimizing the conductor length or the use of tape and glue.

Overcome by the present invention, without compromising solutions for preventing wire breaking and coupling of forces to vibrating structures, are deficiencies of prior methods for mounting wires between vibrating structures, and in particular the mounting of wires in Coriolis mass flow meters.

All wires for conducting electrical signals from vibrating structures according to the apparatus of the present invention are transmitted using wires mounted at one end to one of the structures and mounted at the other end to the other structure with the sections of the wires between the mounted ends being maintained in free suspension. The wires are shaped in the space between their mountings in a half-loop shape. The half-loop shape permits rolling motions for the wires about axes essentially perpendicular to the line between the locations on the structures where the wires are mounted. This half-loop shape and rolling motion prevents kinking and avoids bending which both accelerate fatigue and fracture.

To minimize coupling of any forces either damping or driving to vibrating structures the wires are mounted from the vibrating structures at essentially the axes defined by deflection of the vibrating structures. In particular, the deflection axes chosen are those having the shortest distances from the intersection on the structure of the deflection axes to where the wires must be connected to the electrical components on the structures. So mounting the wires minimizes the moment arms from the axes to the wires and therefore minimizes coupling of external force effects to the vibrating structures.

Maintaining a half-loop shape for a suspended flexible circuit section is a difficult task. If the half-loop shape is not continuously maintained, the suspended section can transition to another shape, such as an "S" shape. The transition to another shape or periodic transitioning between shapes will invariably cause kinking or fatigue as the flexible circuit is vibrated. It is an aim of the present invention to assure continuous maintenance of the selected shape for the flexible circuit.

With the foregoing in mind, the present invention provides a Coriolis mass flow meter comprising a flow tube, a mounting base means for said flow tube with a stationary support means attached to said mounting base means, means for vibrating said flow tube with respect to said mounting base means, means for sensing deflections of said flow tube caused by fluid flow through said flow tube and for producing signals representative of said deflections, and support beam means mounted adjacent said flow tube for supporting said means for vibrating and said means for sensing; characterized by: a flexible electrical conductor device attached to said support beam means and said stationary support means and including affixed multiple electrical conductors for conducting electrical signals to said means for vibrating and from said means for sensing, said flexible electrical conductor device further comprising;
(a) flexible insulating means affixed to said multiple electrical conductors for maintaining said multiple electrical conductors in essentially parallel relationships in a plane over a first distance along the length of said electrical conductors which first distance is greater than the rectilinear distance between said stationary support means and said support beam means; and
(b) said insulating means being configured to provide stiffening at each end of said first distance at the locations where said flexible electrical conductor device is attached to said stationary support means and said support beam means, the stiffening provided by having the width (H) of said insulating means along said first distance symmetrically increased adjacent the ends of said first distance about the centerline (L) for said first distance so the stiffening acts to maintain said first distance with the first width (H) in a smooth curved shape between said stationary support means and said support beam means.

A preferred embodiment for the present invention utilizes a flexible circuit with multiple conductors. Adjacent each end where the flexible circuit is mounted, the flexible circuit increases in width from the width in the region where the wires are maintained in the half-loop shape. The increased widths assures maintenance of the half-loop shape thus preventing kinking and fatigue of the flexible circuit between the mounted ends. Alternate embodiments include providing the flexible circuit with a sheet metal layer or metallized layer that can be used to spot weld the flexible circuit to the vibrating structure.

In the drawings:
FIG. 1 is a perspective view of a Coriolis mass flow rate meter according to the present invention;
FIG. 2 is a perspective view of a Coriolis mass flow rate meter as previously known in the art;
FIG. 3 is a sectional view of a velocity sensor according to the present invention;
FIG. 4 is a front plan view of a Coriolis mass flow rate meter as shown in FIG. 1;
FIG. 5 is a side plan view of a Coriolis mass flow rate meter as shown in FIG. 1;
FIG. 6 is a perspective of a Coriolis mass flow rate meter according to the present invention showing in more detail a preferred embodiment for the flexible circuit of the present invention;
FIG. 7 is a front view of the flexible circuit of the present invention as shown in FIG. 6;
FIG. 8 is a sectional view of the flexible circuit of the present invention as shown in FIG. 7 taken along line 8-8;
FIG. 9 is a sectional side view of a Coriolis mass flow rate meter as shown in FIG. 6;
FIG. 10 is a sectional view of the flexible circuit as shown in FIG. 7 taken along line 10-10.

Corresponding components are designated by the same reference numerals throughout the various figures.

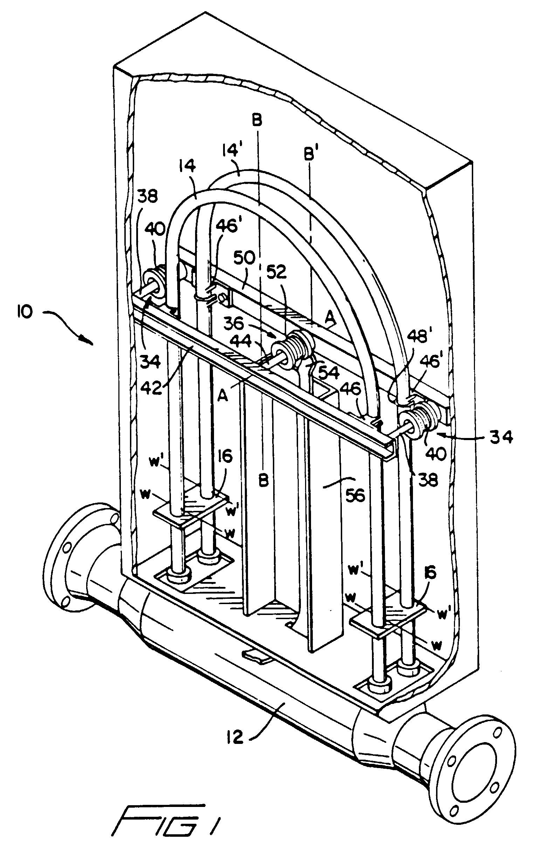

Referring now to the drawings, a Coriolis mass flow rate instrument according to the invention is illustrated in FIG. 1 where it is generally designated by reference numeral 10. Measuring device 10 includes pipe 12 from which two curved flow conduits 14 and 14' are cantilever mounted in substantially parallel fashion. Both flow conduits 14 and 14' are fabricated from continuous tubing and are free of pressure sensitive joints. Fixedly attached to both flow conduits 14 and 14' are supports 16 which in combination with pipe 12 provide a cantilever mounting for flow conduits 14 and 14'. The flow conduits 14 and 14' are selected and mounted so as to have substantially the same rotational inertia and the same spring constants about oscillation axes, W-W and W'-W', which are located substantially about supports 16. Since the flow conduits 14 and 14' are cantilever mounted in an essentially parallel fashion with free ends and have substantially equal rotational inertias and equal spring constants about their respective oscillation axes, W-W and W'-W', these flow conduits, 14 and 14', can be driven in opposition with respect to each other about these oscillation axes, W-W and W'-W', at essentially the same resonant frequency so as to function as the tines of a tuning fork.

Also necessary for the function of a Coriolis mass flow rate instrument is a mechanism for driving the flow conduits 14 and 14' in an oscillatory fashion and sensor systems for measuring the effects caused by generated Coriolis forces. Both the drive mechanism and the sensor systems, preferably velocity sensors, can be configured using permanent magnets positioned adjacent coils of wire (see U.S. Patent Nos. 4,422,338 and 4,491,025).

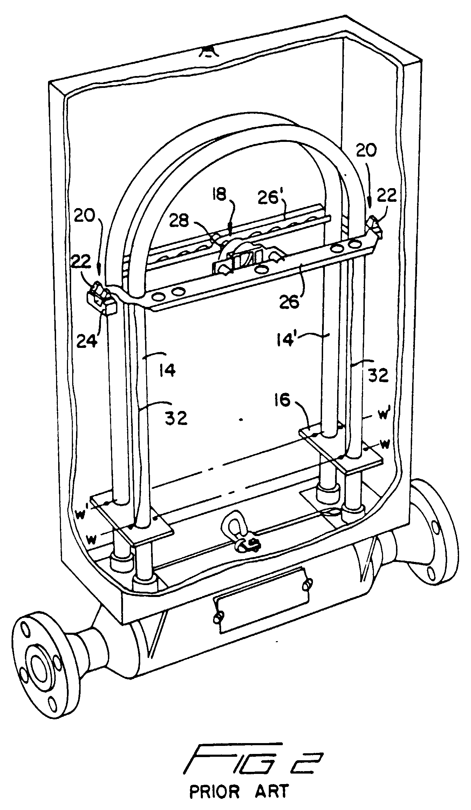

A previously known arrangement for mounting a drive mechanism 18 and a set of velocity sensors 20 is shown in FIG. 2. An arrangement of this general type is known from Engineering Materials and Design, vol. 29, no. 3, March 1985, page 25, Sutton, Surrey, GB "Measuring Mass Flow Using Vibrating Tubes". The velocity sensors 20 as shown in FIG.2, include coils 22 and horseshoe magnets 24 which are configured with respect to each other so that the coils 22 move within essentially uniform magnetic fields produced at both pole faces of the magnets 24 when the flow conduits 14 and 14' are driven in oscillation by drive mechanism 18. The velocity sensors 20 and the drive mechanism 18 are attached to flow conduits 14 and 14' by mounting the various components to the beams 26 and 26' and then attaching the beams 26 and 26' to the flow conduits 14 and 14'. The beams 26 and 26' are mounted on the flow conduits 14 and 14' at equal distances from their respective oscillation axes, W-W and W'-W', however, because the horseshoe magnets 24 for velocity sensors 20 are mounted closer to their oscillation axis W'-W' than are the coils 22 the centers of gravity for the horseshoe magnets 24 and the coils 22 are substantially displaced from having equal distances to their oscillation axes, W'-W' and W-W. This displacement of the centers of gravity and the inherent mass differences between horseshoe magnets 24 and coils 22 results in rotational inertias for velocity sensors 20 which accordingly produce different rotational inertias for flow conduits 14 and 14' that cause flow conduits 14 and 14' to be dynamically unbalanced. Aggregate differences in rotational inertias for the magnets 24, coils 22, drive mechanism 18 with its magnet 28 and coil 30, and beams 26 and 26' can be somewhat reduced, for this configuration, by designing the mass of beam 26 with the masses of coils 22 and 30 to be essentially equal to the mass of beam 26' with the masses of magnets 24 and 28. However, because of the mounting configuration for velocity sensors 20 the center of gravity of beam 26' with its attached coils 22 and 30 is further displaced from its oscillation axis W-W than is the center of gravity of beam 26' with its attached magnets 24 and 28 from oscillation axis W'-W'. With equal masses but different distances from their oscillation axes rotational inertia differences will therefore still exist between flow conduit 14 with attached beam 26 and flow conduit 14' with its beam 26'.

Additionally, degrading the dynamic equivalence of flow conduits 14 and 14' in the meter shown in FIG. 2 is the affixing of wires 32 to flow conduit 14 to provide electrical energy to the coil 30 of drive mechanism 18 and to transmit signals from the coils 22 of the velocity sensors 20. The affixing of wires 32 to flow conduit 14 invariably alters the dynamics of flow conduit 14 to be different from flow conduit 14'.

The configuration for a drive mechanism 36 and unique velocity sensors 34, and their attachment to flow conduits 14 and 14' in accordance with the present invention is shown in FIG. 1. The new velocity sensors 34 and their mounting overcomes the dynamic deficiencies of the embodiment in FIG. 2 and results in the rotational inertia for both flow conduits 14 and 14' with respect to the oscillation axes, W-W and W'-W', to be essentially equal and therefore the dynamics of flow conduits 14 and 14' to be essentially equal.

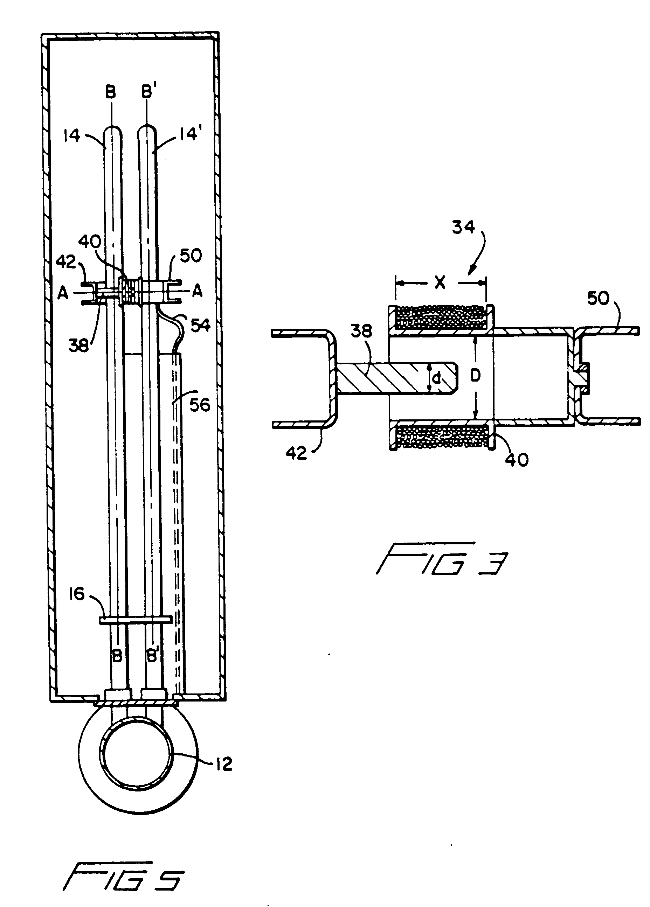

To insure the dynamic balancing of the Coriolis mass flow rate meter 10 shown in FIG. 1 the velocity sensors 34 are configured so as to have essentially equal masses for the magnets 38 and the coils 40, and to have the aggregate centers of gravity for the magnets 38 and the coils 40, when mounted on the flow conduits 14 and 14' to be at essentially the same distances from the oscillation axes, W-W and W'-W', and to be located on the axes, B-B and B'-B', about which the Coriolis forces act. The configuration for velocity sensors 34 is shown in FIG. 3. Instead of using a horseshoe magnet, the velocity sensors 34 of the preferred embodiment of the present invention uses a bar magnet 38 which is mounted so that the magnetic field of only one pole interacts with the coil 40. To assure, as required for velocity sensors 34 for Coriolis mass flow rate meters of the present invention, that the coils 40, when flow conduits 14 and 14' are oscillated, only intersect an essentially uniform magnetic field generated by magnets 38, the diameter of magnets 38, i.e., d, can be designed to be no more than one half the diameter of the open interior of coils 40, i.e., D, and preferably this relationship is less than one half. Further, the relative movement of magnets 38 with respect to coils 40, as caused by oscillation of flow conduits 14 and 14' and Coriolis force induced distortion, can be designed to be one half or less than the longitudinal extent, i.e., x, of the windings 41 of coils 40.

With the above configuration for velocity sensors 34 a beam 42 can be assembled with bar magnets 38 for velocity sensors 34 affixed at each end of the beam 42. At the center of the beam 42 a third bar magnet 44 for drive mechanism 36 is affixed. The beam 42 is then attached to a first flow conduit 14 so that the distances from the oscillation axis, W-W, to the sections of flow conduit 14 where the beam 42 is attached to flow conduit 14 are essentially equal. Semi-circular supports 46 and threaded U rings 48 are used to attach beam 42 to flow conduit 14. The semi-circular supports 46 are designed so as to maintain the distance of the beam 42 from the flow conduit 14 such that the center of gravity for the aggregate configuration of the beam 42 and the attached magnets 38 and 44, is located along the central axis, A-A of drive mechanism 36, and is also positioned on the axis, B-B (see FIG. 1) about which Coriolis forces generated by the combination of oscillating flow conduit 14 about the oscillation axis, W-W, and flowing a substance through flow conduit 14 act. This assures that the combination of the rotational inertias resulting from oscillation of flow conduit 14 with the affixed beam 42 and its attachments generate no torques which introduce errors into the measurement of the Coriolis forces acting on flow conduit 14.

A second beam 50 can also be assembled in accordance with the above described configuration for velocity sensors 34 where the coils 40 for velocity sensors 34 are affixed at each end of the beam 50. At the center of the beam 50 a third coil 52 for drive mechanism 36 is affixed. The beam 50 is then attached to a second flow conduit 14' so that the distances from the oscillation axis, W'-W', to the sections of flow conduit 14' where the beam 50 is attached to flow conduit 14' are essentially equal. Semi-circular supports 46' and threaded U rings 48' are used to attach the beam 50 to the flow conduit 14'. The semi-circular supports 46' are designed so as to maintain the distance of the beam 50 from the flow conduit 14' such that the center of gravity for the aggregate configuration of the beam 50 and the attached coils 40 and 52, is located along the central axis, A-A, of drive mechanism 36, and is also positioned on the axis, B'-B' (see FIG. 1), about which Coriolis forces generated by the combination of oscillating flow conduit 14' about the oscillation axis, W'-W', and flowing a substance through flow conduit 14' act. This assures that the combination of the rotational inertias resulting from oscillation of flow conduit 14' for the beam 50 and its attachments generate no torques which introduce errors into the measurement of the Coriolis forces acting on flow conduit 14'.

Velocity sensors configured about horseshoe magnets where both pole faces are used can be mounted in conformity with the present invention if the masses of the magnets and the coils are equal and if the centers of gravity for both the first beam 42 and the second beam 50 with these attachments are located on the respective axes, B-B and B'-B', about which generated Coriolis forces act.

The distances from the axes, B-B and B'-B', about which the generated Coriolis forces act to the coils 40 and magnets 38 for velocity sensors 34 mounted on the beams, 42 and 50, are selected so that the rotational inertias for the attachments to flow conduits 14 and 14' maintains the resonant frequency of the flow conduits 14 and 14' at a higher value than the resonant frequency about the oscillation axes, W-W and W'-W', but not in a harmonic relationship. A harmonic relationship for these two resonant frequencies results in a synchronous sampling of errors which causes zero shift, while a non-harmonic relationship results in random sampling and therefore a nulling of error signals over a finite number of samplings.

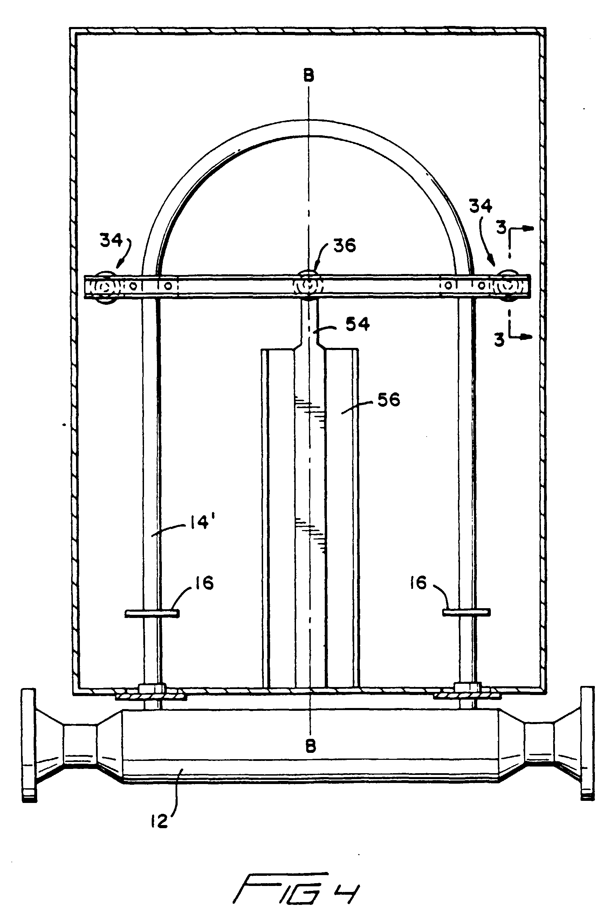

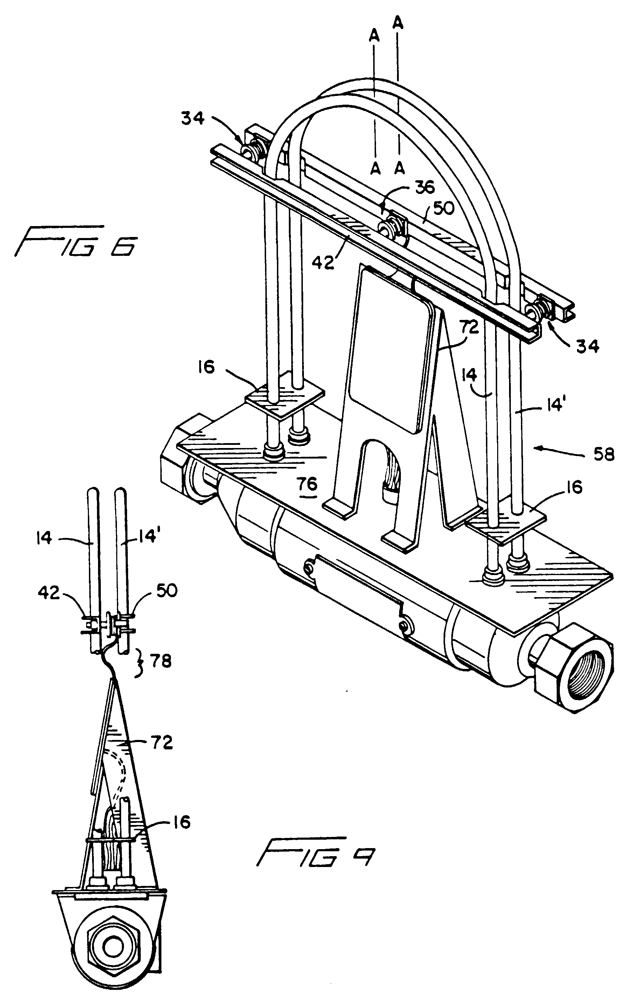

A further requirement for coils 40 and 52 mounted on beam 50 is the necessity to provide electrical current to the coil 52 of drive mechanism 36 and to transmit signals from the coils 40 of velocity sensors 34. For one preferred embodiment a flat flexible ribbon 54 with multiple electrical conductors as known in the art is used. The flat flexible ribbon 54 is supported by a beam 56 so that the flat flexible ribbon 54 can be attached to the beam 50 at the location of the drive mechanism 36 coil 52. The flat flexible ribbon 54 is oriented with respect to the beam 50 so that as the flow conduit 14' is oscillated the flat flexible ribbon 54 introduces minimum drag on the flow conduit 14'. Minimizing drag is assured by having the flat flexible ribbon 54 not mounted in a straight line configuration from the beam 56 to the drive mechanism 36 but in a half-loop shape so as to be free to oscillate with the flow conduit 14', see FIG. 5. Further, the attachment of the flat flexible ribbon 54 to the beam 50 at the location of the central coil 52 assures that the central axis of the flat flexible ribbon 54 lies essentially coincident with the axis B-B (see FIG. 4), of flow conduit 14' about which Coriolis forces act so that the contribution of torques from the flat flexible ribbon 54 are minimized.

Application of a flat flexible ribbon with a half-loop shape for use on only Coriolis mass flow meters is not to be understood as the only use for such flat flexible ribbons. The flat flexible ribbons with half-loop shapes can in fact as would be understood in the art, be used on any electromechanical structure where electrical signals are to be transmitted between vibrating structures.

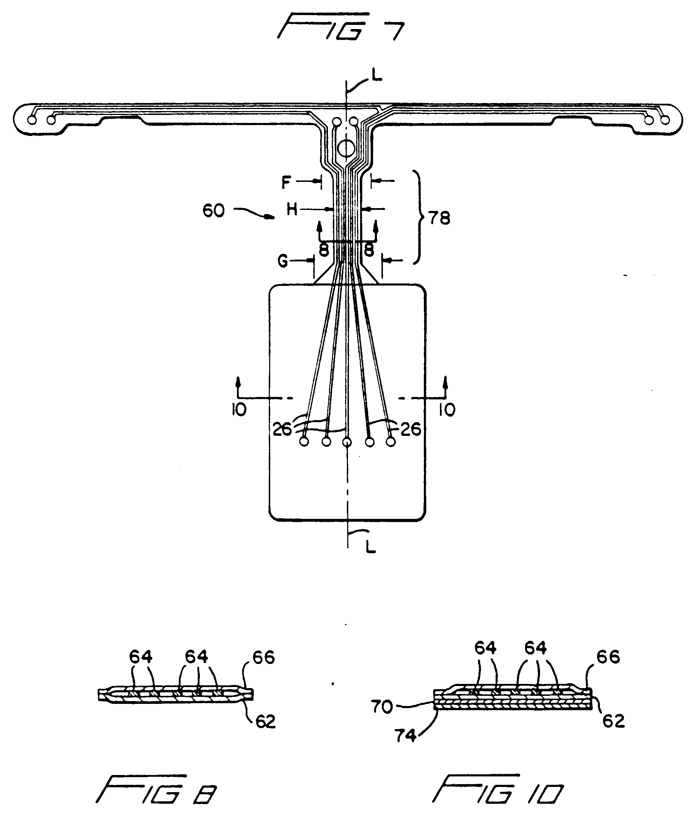

Use of another preferred embodiment of a flat flexible ribbon embodiment with a half-loop shape on a Coriolis mass flow rate meter 58 is shown in FIG. 6. The Coriolis mass flow rater meter 58, for purposes of understanding the invention, includes two continuous flow conduits 14 and 14', which are driven to vibrate by a drive mechanism 36. The components of the drive mechanism 36 are connected to the flow conduits 14 and 14' by beams 42 and 50. Also mounted on the beams 42 and 50 are the components for two velocity sensors 34. As explained above, coupling of damping and driving forces to the flow conduits 14 and 14' must be minimized.

The flat flexible ribbon used in FIG. 6 is a flexible circuit 60 (see FIG. 7) which can be built up from a synthetic insulating reinforcement layer 62 such as sold under the trademark Kapton (see FIG. 8) with rolled annealed copper conductors 64 laid on the reinforcement layer 62. Over the copper conductors 64 another synthetic insulating cover layer 66 can then be laid. The reinforcement and cover layers (62 and 68) are thin, for example, on the order of 0.12 and 2.5 thousandths of a centimeter, so as to be flexible. Accordingly, the copper conductors 64 are also very thin, for example, 3.5 thousandths of a centimeter.

The flexible circuit 60 can be mounted to the Coriolis mass flow rate meter 58 by use of a pressure sensitive external adhesive 70, as known in the art, which is laid down on the reinforcement layer 62 on those regions of the flexible circuit 60 where the flexible circuit 60 will be in contact with structures of the Coriolis mass flow rate meter 58 such as on the stationary support 72 or along the beams 42 and 50. Prior to mounting the flexible circuit 60 a release liner 74, as is also known in the art, is laid over the pressure sensitive external adhesive 70 to protect it. (See FIG. 10.)

Alternate means for fastening the flexible circuit to the beams 42 and 50 include providing a metallized layer or a thin sheet metal layer in lieu of or in conjunction with the adhesive layer 70. When used, the metallized layer could be secured to the beams 42 and 50 by spot welding or soldering. Where both an adhesive layer and a metallized layer are used, the adhesive layer would be used to position the flexible circuit 60 until the spot welding or soldering was finished. Alternatively, the portions of the flexible circuit 60 along the beams 42 and 50 could be provided with holes through which screws, spot welded retainers or tabs, or other conventional fasteners could be inserted and which would extend into correspondingly positioned holes in the beams 42 and 50.

For a preferred embodiment of the invention as used on the Coriolis mass flow rate meter 58, the electrical signals from the drive mechanism 36 and velocity sensors 34 on the Coriolis mass flow rate meter 58 are transmitted via flexible circuit 60 between a beam 50 attached to vibrating flow conduits 14 and 14' and a stationary support 72 mounted on the base 76 of the Coriolis mass flow rate meter 58. The flexible circuit 60 is mounted so that a throat section 78 of the flexible circuit 60 in which the necessary number of copper conductors 64 are laid out substantially parallel to each other and as closely spaced from each other as is convenient is positioned or suspended in the space between the beam 50 and the stationary support 72.

The length of the throat section 78 of the flexible circuit 60 is greater than the rectilinear distance between beam 50 and the stationary support 72. Therefore, the throat section 78 will, as a first shape, form a half-loop shape between the beam 50 and the stationary structure 72 (see FIG. 9). Other shapes could possibly be formed such as an "S" shape. All shapes other than a half-loop shape, however, are not preferred. For shapes other than the half-loop shape, care must be taken to assure that shape of the throat section 78 cannot transition between alternate shapes. For example, an S-shaped section could transition between the half-loop shape and its S-shape. Further, no sharp bends can be allowed to be formed along the length of the throat section 78 of the flexible circuit 60 because sharp bends when repeatedly vibrated by the relative motion between the stationary support 72 and the beam 50 will lead to fatigue breaking of the copper conductors 64, the reinforcement layers 62, or both.

The half-loop shape of the throat section 78 results in a rolling motion or a wave-like motion of the flexible circuit 60 as the beam 50 moves with respect to the stationary support 72. To continuously maintain the half-loop shape and preclude sharp bends from forming in the regions adjacent the locations where the flexible circuit 60 is mounted, the widths, F and G, of the portions of the suspended flexible circuit 60 are increased from the width, H, of the throat section 78 prior to the two locations where the flexible circuit 60 is fixedly mounted. This increases the stiffness of the flexible circuit 60 over that of the throat section 78. This increase in stiffness assures maintenance of the half-loop shape within the region of the throat section 78 and prevents sharp bending adjacent the mounting locations of the flexible circuit 60. The transition from width H to width F and that from width H to width G should not be abrupt but should be a gradual, smoothly, outwardly tapering area along each of the lateral edges of the flexible circuit 60 as shown in FIG. 7. Preferably, these outwardly tapering regions occur in an essentially symmetrical fashion about the longitudinal centerline L-L. With an abrupt transition at the points of attachment, the flexible circuit 60 would flex like a hinge at the points of attachment, which, in turn, would concentrate stress in a highly localized region that would fatigue the conductors 64. The increased stiffness, however, does not increase coupling of forces to the flow conduit 14'. The force components which result from the increased stiffness are directed to preventing sharp bending, such as would cause creasing, of the flexible circuit 60 adjacent the fixed mountings and maintaining of the half-loop shape that minimizes the coupling of forces to the flow conduit 14'. Coupling of forces to flow conduit 14' is most effectively accomplished by flexible circuit 60 when the damping or driving forces are aligned parallel to the longitudinal axis L-L (see FIG. 7) of flexible circuit 60. This would result in a pulling or pushing of the flexible circuit 60 in a straight line. However, because of the half-loop shape in the region of the throat section 78, the flexible circuit 60 is prevented from aligning forces along longitudinal axis L-L of the flexible circuit 60.

The above discussion and related illustrations of the present invention are directed primarily to preferred embodiments and practices of the invention. Numerous changes and modifications in the actual implementation of the concepts described herein will be apparent to those skilled in the art, and it is contemplated that such changes and modifications may be made without departing from the scope of the invention as defined by the following claims.

## Claims

1. A Coriolis mass flow meter (58) comprising a flow tube (14'), a mounting base means (76) for said flow tube (14') with a stationary support means (72) attached to said mounting base means (76), means for vibrating (36) said flow tube (14') with respect to said mounting base means, means for sensing (34) deflections of said flow tube (14') caused by fluid flow through said flow tube (14') and for producing signals representative of said deflections, and support beam means (50) mounted adjacent said flow tube (14') for supporting said means for vibrating (36) and said means for sensing (34); characterized by:
a flexible electrical conductor device (60) attached to said support beam means (50) and said stationary support means (72) and including affixed multiple electrical conductors (64) for conducting electrical signals to said means for vibrating (36) and from said means for sensing (34), said flexible electrical conductor device (60) further comprising;
(a) flexible insulating means (62) affixed to said multiple electrical conductors (64) for maintaining said multiple electrical conductors (64) in essentially parallel relationships in a plane over a first distance (78) along the length of said electrical conductors (64) which first distance is greater than the rectilinear distance between said stationary support means (72) and said support beam means (50); and
(b) said insulating means (62) being configured to provide stiffening at each end of said first distance (78) at the locations where said flexible electrical conductor device (60) is attached to said stationary support means (72) and said support beam means (50), the stiffening provided by having the width (H) of said insulating means (62) along said first distance (78) symmetrically increased adjacent the ends of said first distance (78) about the centerline (L) for said first distance (78) so the stiffening acts to maintain said first distance (78) with the first width (H) in a smooth curved shape between said stationary support means (72) and said support beam means (50).

2. The apparatus according to claim 1 further comprising means for mounting said insulating means (62) to said stationary support means (72) and said support beam means (50) in a fixed relationship.

3. The apparatus of claim 2 wherein the means for mounting said insulating means (62) is an adhesive layer (70) provided on said insulating means (62) coincident to the locations where said insulating means (62) is attached to said stationary support means (72) and said support beam means (50).

4. The apparatus of claim 2 wherein the means for mounting said insulating means (62) is a metal layer provided on said insulating means (62) coincident to the locations where said insulating means (62) is attached to said stationary support means (72) and to said support beam means (50) whereby said metal layer can be spot welded to said stationary support means (72) and said support beam means (50).

5. The apparatus of claim 1 wherein the curved shape of said first distance (78) of said flexible electrical conductor device (60) between said stationary support means (72) and said support beam means (50) is maintained in an essentially half-loop shape.

6. The apparatus of claim 1 wherein the curved shape of said first distance (78) of said flexible electrical conductor device (60) between said stationary support means (72) and said support beam means (50) is maintained in an essentially "S" shape.

## Patentansprüche

1. Coriolis-Massendurchflußmesser (58) umfassend ein Durchflußrohr (14'), ein Montagegrundplattenmittel (76) für das Durchflußrohr (14') mit einem stationären Stützmittel (72), das an dem Montagegrundlplattenmittel (76) angebracht ist, Mittel zum Vibrieren (36) des Durchflußrohrs (14') in Bezug auf das Trägerplattenmittel, Mittel zum Erfassen (34) von Ablenkungen des Durchflußrohrs (14'), welche durch Fluiddurchfluß durch das Durchflußrohr (14') verursacht sind und zum Erzeugen von Signalen, welche für die Ablenkungen repräsentativ sind, und Trägerstützmittel (50), die neben dem Durchflußrohr (14') zum Tragen der Mittel zum Vibrieren (36) und der Mittel zum Erfassen (34) angebracht sind;
gekennzeichnet durch:
eine flexible elektrische Leitereinrichtung (60), die an dem Trägerstützmittel (50) und dem stationären Stützmittel (72) angebracht ist und mehrere daran angebrachte elektrische Leiter (64) zum Leiten elektrischer Signale zu dem Mittel zum Vibrieren (36) sowie von dem Mittel zum Erfassen (34) einschließt, wobei die elektrische Leiteranordnung (60) weiter umfaßt:
(a) flexibles Isoliermittel (62), welches an den elektrischen Leitern (64) angebracht ist, um die mehreren elektrischen Leiter (64) im wesentlichen parallel zueinander in einer Ebene über eine erste Entfernung (78) entlang der Länge der elektrischen Leiter (64) zu halten, wobei die erste Entfernung größer als die gerade Entfernung zwischen dem stationären Stützmittel (72) und dem Trägerstützmittel (50) ist; und
(b) das Isoliermittel (62) so ausgebildet ist, daß es eine Versteifung an jedem Ende der ersten Entfernung (78) an den Stellen bildet, an denen die flexible elektrische Leitereinrichtung (60) an dem stationären Stützmittel (72) und dem Trägerstützmittel (50) angebracht ist, wobei die Versteifung dadurch erfolgt, daß die Weite (H) des Isoliermittels (62) entlang der ersten Entfernung (78) symmetrisch neben den Enden der ersten Entfernung (78) um die Mittellinie (L) für diesen ersten Abstand (78) wächst, so daß die Versteifung dazu dient, die erste Entfernung (78) mit der ersten Weite (H) in einer glatt gekrümmten Form zwischen dem stationären Stützmittel (72) und dem Stützträgermittel (50) zu halten.

2. Apparat nach Anspruch 1, weiterhin Mittel zum Anbringen des Isoliermittels (62) an dem stationären Stützmittel (72) und dem Trägerstützmittel (50) in einer festen Beziehung umfassend.

3. Apparat nach Anspruch 2, bei dem das Mittel zum Anbringen des Isoliermittels (62) eine Klebeschicht (70) ist, mit der das Isoliermittel (62) übereinstimmend mit den Stellen ausgestattet ist, an denen das Isoliermittel an dem stationären Stützmittel (72) und dem Trägerstützmittel (50) angebracht ist.

4. Apparat nach Anspruch 2, bei dem das Mittel zum Anbringen des Isoliermittels (62) eine Metallschicht ist, mit der das Isoliermittel (62) übereinstimmend mit den Stellen ausgestattet ist, an denen das Isoliermittel an dem stationären Stützmittel (72) und dem Trägerstützmittel (50) angebracht ist, wodurch die Metallschicht an dem stationären Stützmittel (72) und dem Trägerstützmittel (50) punktgeschweißt sein kann.

5. Apparat nach Anspruch 1, bei dem die gekrümmte Form der ersten Entfernung (78) der flexiblen elektrischen Leiteranordnung (60) zwischen dem stationären Stützmittel (72) und dem Trägerstützmittel (50) in einer im wesentlichen Halbschleifenform gehalten ist.

6. Apparat nach Anspruch 1, bei dem die gekrümmte Form des ersten Abstands (78) der flexiblen elektrischen Leiteranordnung (60) zwischen dem stationären Stützmittel (72) und dem Trägerstützmittel (50) in einer im wesentlichen "S"-Form gehalten ist.

## Revendications

1. Débitmètre (58) massique à effet Coriolis comprenant un tube d'écoulement (14'), un moyen (76) formant base de montage pour ledit tube d'écoulement (14') avec un moyen (72) formant support fixe fixé audit moyen (76) formant base de montage, un moyen pour faire vibrer (36) ledit tube d'écoulement (14') par rapport audit moyen formant base de montage, un moyen pour détecter (34) des déviations dudit tube d'écoulement (14') dues à un écoulement de fluide dans ledit tube d'écoulement (14') et pour produire des signaux représentatifs desdites déviations, et un moyen (50) formant poutrelle de support monté dans une position adjacente audit tube d'écoulement (14') pour supporter ledit moyen de vibration (36) et ledit moyen de détection (34); caractérisé par:
un dispositif (60) conducteur électrique flexible fixé audit moyen (50) à poutrelle de support et audit moyen (72) formant support fixe et comportant de multiples conducteurs électriques fixes (64) pour acheminer des signaux électriques vers ledit moyen de vibration (36) et à partir dudit moyen de détection (34), ledit dispositif (60) conducteur électrique flexible comprenant en outre
(a) un moyen isolant flexible (62) fixé auxdits multiples conducteurs électriques (64) pour maintenir lesdits multiples conducteurs électriques (64) essentiellement parallèles les uns aux autres dans un plan sur une première distance (78) le long de la longueur desdits conducteurs électriques (64), cette première distance étant supérieure à la distance linéaire entre ledit moyen (72) formant support fixe et ledit moyen (50) formant poutrelle de support; et
(b) ledit moyen isolant (62) étant configuré pour conférer de la rigidité à chaque extrémité de ladite première distance (78) en des emplacements où ledit dispositif (60) conducteur électrique flexible est fixé audit moyen (72) formant support fixe et audit moyen (50) formant poutrelle de support, la rigidité étant obtenue en ayant une largeur (H) dudit moyen isolant (62) le long de ladite première distance (78), qui croît symétriquement dans une position adajcente aux extrémités de ladite première distance (78) autour de la ligne centrale (L) pour ladite première distance (78), de telle sorte que la rigidité agit pour maintenir ladite première distance (78) avec la première largeur (H), selon une forme légèrement recourbée entre ledit moyen (72) formant support fixe et ledit moyen (50) formant poutrelle de support.

2. Appareil selon la revendication 1, comprenant en outre un moyen pour monter ledit moyen isolant (62) audit moyen (72) formant support fixe et audit moyen (50) fourmant poutrelle de support, de manière fixe les uns par rapport aux autres.

3. Appareil selon la revendication 2, dans lequel le moyen pour le montage dudit moyen isolant (62) est une couche adhésive (70) disposée sur ledit moyen isolant (62) et qui coïncide avec les emplacements où ledit moyen isolant (62) est fixé audit moyen (72) formant support fixe et audit moyen (50) formant poutrelle de support.

4. Appareil selon la revendication 2, dans lequel le moyen de montage dudit moyen isolant (62) est une couche de métal disposée sur ledit moyen isolant (62) et qui coïncide avec les emplacements où ledit moyen isolant (62) est fixé audit moyen (72) formant support fixe et audit moyen (50) formant poutrelle de support, à la suite de quoi ladite couche de métal peut être soudée par points audit moyen (72) formant support fixe et audit moyen (50) formant poutrelle de support.

5. Appareil selon la revendication 1, dans lequel la forme recourbée de ladite première distance (78) dudit dispositif (60) conducteur électrique flexible entre ledit moyen (72) formant support fixe et ledit moyen (50) formant poutrelle de support, est maintenue selon une forme essentiellement en demi-boucle.

6. Appareil selon la revendication 1, dans lequel la forme recourbée de ladite première distance (78) dudit dispositif (60) conducteur électrique flexible entre ledit moyen (72) formant support fixe et ledit moyen (50) formant poutrelle de support, est maintenue selon une forme essentiellement en "S".
